# EUROPÄISCHE PATENTANMELDUNG

(11) **EP 0 729 021 A1**
(43) Veröffentlichungstag der Anmeldung: **28.08.1996**
(21) Anmeldenummer: 95102734.1
(22) Anmeldetag: 25.02.1995
(51) Int. Cl.: G01N 1/31

(54) **Vorrichtung zur Bearbeitung von Proben auf Objektträgern**

(71) Anmelder: BOEHRINGER MANNHEIM GMBH, 68298 Mannheim (DE)
(72) Erfinder: Menzler, Horst, D-82347 Bernried (DE); Lang, Alfred, D-82386 Oberhausen (DE)

(57) **Zusammenfassung**

Eine Vorrichtung zur Bearbeitung von Proben auf Objektträgern (31), indem ein Objektträger (31) gegen einen Zellblock (10) gedrückt wird, so daß zwischen Zellblock (10) und Objektträger (31) eine Kammer gebildet wird. Die Kammer kann über einen Fluidkanal (16), der an einem Ende einen Anschlußtrichter (17) besitzt, mittels einer Pipettiervorrichtung (19), die eine in den Anschlußtrichter (17) passende Anschlußspitze (18) besitzt, mit Flüssigkeit gefüllt werden.

Eine Vorrichtung zur Bearbeitung von Proben, bei der ein Objektträger (31) über eine Andruckplatte (32) gegen den Zellblock (10) der Vorrichtung gedrückt wird. Eine Vorrichtung zur Bearbeitung von Proben, die ein Niederdruckelement (40) besitzt, das in seiner Ruhestellung die Vorrichtung von einer Flüssigkeitszufuhr absperrt, und das nach dem Niederdrücken eine Flüssigkeitszufuhr ermöglicht.

## Beschreibung

Die Erfindung betrifft Apparaturen und Verfahren für die Bearbeitung von Proben, im speziellen biologischen Materialien, die sich auf Objektträgern befinden. Während dieser Bearbeitung werden die Proben in kontrollierter Weise mit Flüssigkeiten in Kontakt gebracht.

### Stand der Technik

In der europäischen Patentanmeldung EP-A-0 508 568 der Amoco Corporation wird ein System zur Bearbeitung von Proben auf Objektträgern beschrieben, bei dem die Objektträger in eine Zelle eingebracht werden. Der Objektträger wird von einer Andruckvorrichtung an einen Zellenblock gedrückt, der eine Ausnehmung besitzt. In der Ausnehmung befindet sich sowohl ein Zufluß als auch ein Abfluß für Flüssigkeiten. Die Ausnehmung ist von einer Gummidichtung umgeben, so daß beim Andruck des Objektträgers an diese Dichtung eine abgeschlossene Kammer entsteht. Der Andruck des Objektträgers an die Gummidichtung wird mit einem aufwendigen Exzentertrieb bewerkstelligt. Durch die mit dieser Andruckvorrichtung variierbare Andruckkraft kann die Gummidichtung mehr oder weniger zusammengedrückt werden, um so das Volumen der gebildeten Kammer in gewissen Grenzen variieren zu können. Ein Nachteil dieser Vorrichtung liegt darin, daß die Andruckvorrichtung relativ kompliziert aufgebaut ist, so daß verhältnismäßig hohe Baukosten auftreten und der Platzbedarf für die Andruckvorrichtung hoch ist. Daraus resultiert eine verhältnismäßig große Bautiefe der Zelle, was insbesondere nachteilig ist, wenn mehrere Zellen kompakt zu einem System zusammengefügt werden sollen.

Zum Stand der Technik gehört weiterhin die internationale Anmeldung WO 94/18539, in der eine Apparatur zur Anfärbung von Gewebsschnitten beschrieben ist. Die in dieser Patentanmeldung beschriebenen Anfärbekammern besitzen einen Zellblock mit einer Ausnehmung, die so gestaltet ist, daß zwei Kammerbereiche entstehen, wenn ein Objektträger gegen den Zellblock gedrückt wird. Der entstehende Kammerbereich im unteren Teil des Zellblockes besitzt die Form eines Spaltes, in den von der Unterseite durch ein Schlauchsystem Flüssigkeiten sowohl eingespült als auch abgezogen werden können. Im oberen Kammerbereich ist die Kammer trichterförmig erweitert und besitzt eine schräge Auflagefläche, auf die feste Reagenzzubereitungen gegeben werden können. Zum Andruck des Objektträgers an den Zellblock werden in dieser Patentanmeldung fest installierte Blattfedern vorgeschlagen. Der Objektträger wird von der Oberseite zwischen den Zellblock und die Blattfedern geschoben, wobei der Gegendruck der Blattfedern zu überwinden ist. Ein Nachteil dieser Anordnung besteht darin, daß die Blattfedern einerseits relativ stark sein müssen, um ein dichtendes Anliegen des Objektträgers auf den Zellblock zu ermöglichen, andererseits diese hohe Federkraft der Blattfedern von dem Objektträger beim Einschieben überwunden werden muß. Da hierfür vom Bedienungspersonal jedoch ein relativ hoher Druck auf den Objektträger ausgeübt werden muß, kann es dabei zum Zerbrechen des Objektträgers kommen. Die Blattfedern üben auf den Objektträger in der Zelle einen punktuellen Druck aus, durch den ein dichtendes Anliegen des Objektträgers nur schwer zu realisieren ist. Ein weiterer Nachteil der beschriebenen Anfärbekammern besteht darin, daß zur Befüllung der Kammern mit Flüssigkeiten ein kompliziertes Schlauchsystem mit teuren Ventilen und Pumpen benötigt wird. Die relativ langen Schlauchverbindungen, die notwendig sind, erhöhen auch das Risiko von Verschleppungen.

In der europäischen Patentanmeldung EP-A-0 310 399 (Shandon Scientific Ltd.) wird eine Kammer zur Anfärbung von Geweben beschrieben. Die Kammer wird aus einem Objektträger und einem Aufsatz für den Objektträger gebildet. Am oberen Ende der Anordnung befindet sich zwischen Objektträger und Aufsatz ein trichterförmiger Spalt, in den Flüssigkeiten gegeben werden können, während sich im unteren Bereich zwischen Objektträger und Aufsatz ein Kapillarspalt befindet. Zur Anfärbung von Geweben, die sich auf dem Objektträger befinden, wird Flüssigkeit in den trichterförmigen Spalt gegeben, die sich aufgrund der Kapillarkräfte in dem Kapillarspalt ausbreitet. Zur Verdrängung einer Anfärbeflüssigkeit aus dem Kapillarspalt wird eine weitere Flüssigkeit in die trichterförmige Öffnung gegeben. Ein Nachteil dieser Vorrichtung ist es, daß der Einschluß von Luftblasen in den Kapillarspalt nicht ausgeschlossen werden kann, so daß die Anfärbung der Probe uneinheitlich ausfallen kann.

### * Zelle mit Anschlußtrichter

Aufgabe der vorliegenden Erfindung war es, die im Stand der Technik bekannten Vorrichtungen zur Bearbeitung von Proben auf Objektträger dahingehend zu verbessern, daß gleichmäßige Anfärbungen von Proben möglich sind, teure Bauelemente, wie Ventile und Pumpen, weitestgehend vermieden werden und die Verschleppung von Flüssigkeiten durch Schlauchsysteme weitestgehend vermieden wird.

Diese Aufgabe wurde gelöst durch eine Vorrichtung zur Bearbeitung von Proben auf Objektträgern mit Flüssigkeiten, die die folgenden Elemente beinhaltet:
- eine Zelle mit einem Zellenblock, der eine Andruckfläche besitzt, in der sich eine Ausnehmung befindet und mit einer Andruckvorrichtung zum Andruck eines in der Zelle befindlichen Objektträgers an die Andruckfläche des Zellblockes, in der Weise, daß sich aufgrund der Ausnehmung im Zellblock eine Kammer zwischen Zellblock und Objektträger ausbildet, wobei in der Ausnehmung des Zellblockes mindestens eine Öffnung vorhanden ist, die in einen Fluidkanal einmündet,
- einen Anschlußtrichter, der mit dem Fluidkanal verbunden ist sowie
- mindestens eine Pipettiervorrichtung mit einer Anschlußspitze, die dichtend in den Anschlußtrichter paßt.

### * Probenmaterialien und Objektträger

Probenmaterialien, die innerhalb der vorliegenden Zelle bearbeitet werden können, sind z. B. Gewebsschnitte, Ausstriche, Proben von Baktieren, Pilzen usw. Die genannten Proben werden auf die im Stand der Technik bekannten Objektträger aufgebracht und gegebenenfalls fixiert. Die Zubereitung von Proben auf Objektträgern ist im Stand der Technik hinlänglich bekannt, so daß sie an dieser Stelle nicht näher beschrieben wird.

Die im Stand der Technik gebräuchlichen Objektträger sind in der Regel Glasplatten mit einer Dicke von wenigen Millimetern. Es ist möglich, die Zelle zur Bearbeitung der Objektträger und die Objektträger selbst, geometrisch aufeinander anzupassen, indem die Abmessungen des Objektträgers geeignet gewählt werden oder z. B. eine Abrundung an der unteren Kante des Objektträgers vorgenommen wird. Es ist auch möglich, an einer Stelle des Objektträgers, die zur Aufnahme der Proben dient, eine Vertiefung vorzusehen, in die die Probe eingebracht wird. Als Objektträgermaterialien können weiterhin Kunststoffe eingesetzt werden, sofern sie resistent gegenüber den verwendeten Flüssigkeiten sowie gegenüber den angewandten Temperaturen sind.

### * Flüssigkeiten zur Bearbeitung der Proben

Die Flüssigkeiten, die zur Bearbeitung der Proben verwendet werden, sind insbesondere gelöste Farbstoffe, antikörperhaltige Reagenzien, nukleinsäurehaltige Flüssigkeiten sowie Hilfsflüssigkeiten zur Bearbeitung der Proben. Unter solche Hilfsflüssigkeiten fallen insbesondere Lösungen zur Mazeration, Entfettung und zum Aufbrechen intakter Zellen. Die genannten Antikörper oder Nukleinsäurebruchstücke sind vorteilhaft an Farbstoffe oder anderweitig nachweisbare Label gebunden, um auf diese Weise eine Anfärbung bzw. andersartige Kennzeichnung der Probe zu ermöglichen.

Ziel der Bearbeitung der Proben ist es, eine Anfärbung oder anderweitige Kennzeichnung der Proben zu erzielen, aufgrund derer eine Untersuchung des Gewebes möglich wird. Die Anfärbungen können relativ unspezifischer Natur sein, um beispielsweise Zellgrenzen besser sichtbar zu machen oder sie können spezifisch sein, wie dies beispielsweise mit Antikörpern und Nukleinsäurefragmenten angestrebt wird, um die Anwesenheit bestimmter Zielmoleküle im Gewebe anzuzeigen.

Bezüglich der Probenpräparation, den Anfärbetechniken und den möglichen Farbstoffen bzw. Labeln wird hiermit vollinhaltlich auf EP-A-0 508 568 Bezug genommen.

### *Zellblock

Die erfindungsgemäße Vorrichtung besitzt eine Zelle, in die der Objektträger mit der Probe gegeben wird. Die Zelle ihrerseits beinhaltet einen Zellblock, an den der Objektträger angedrückt wird. Der Zellblock besteht vorteilhaft aus einem gut wärmeleitenden Material, da viele Bearbeitungsschritte von Proben auf Objektträger bei erhöhten Temperaturen durchgeführt werden. Im Inneren des Zellblockes können Heizelemente, wie z. B. elektrische Widerstände oder auch Kühlvorrichtungen, wie beispielsweise Kühlschlangen, enthalten sein. Vorteilhaft ist es, wenn der Zellblock von einem Fluidkanal, vorzugsweise in Schlangen- oder Spiralform, durchzogen ist. Durch die Einbringung temperierter Flüssigkeiten in den Fluidkanal kann der Zellblock auf die gewünschten Temperaturen gebracht werden. Eine weitere Methode, den Zellblock zu temperieren, die allerdings relativ kostspielig ist, besteht darin, den Zellblock in thermischen Kontakt mit einem Peltierelement zu bringen. Mit diesem Peltierelement kann sowohl eine Erwärmung als auch eine Kühlung des Zellblockes erzielt werden.

Soll der Zellblock aus der Zelle entnehmbar gestaltet sein, so ist es vorteilhaft, Anschlußelemente, wie beispielsweise elektrische Kontakte, vorzusehen, um eine einfache Verbindung der Heizelemente oder auch der Fluidkanäle innerhalb des Zellblockes mit entsprechenden Verbindungsstücken der Zelle zu ermöglichen.

Als Materialien für den Zellblock sind insbesondere Aluminium, Aluminiumlegierungen sowie andere gut wärmeleitende Metalle und Legierungen geeignet. Aufgrund der häufig agressiven Flüssigkeiten, mit denen der Zellblock in Berührung gebracht wird, sind außer Aluminium und Aluminiumlegierungen insbesondere chemisch widerstandsfähige Spezialstähle geeignet. Ist es vorgesehen, die Zelle lediglich relativ wenig zu erwärmen, so können auch Kunststoffe als Material für den Zellblock verwendet werden.

Der Zellblock besitzt eine Andruckfläche, an die der Objektträger dichtend angedrückt werden kann. Innerhalb der Andruckfläche befindet sich eine Ausnehmung, die eine Kammer bildet, sofern ein Objektträger an die Andruckfläche des Zellblockes gepreßt wird. Die Andruckfläche des Zellblockes ist in der Regel planar. Vorteilhaft befindet sich auf der Andruckfläche eine Dichtung, so daß bei Andruck des Objektträgers an die Andruckfläche eine Abdichtung gewährleistet werden kann. Vorteilhaft befindet sich diese Dichtung in der Nähe des Randes der Ausnehmung.

Die Ausnehmung innerhalb der Andruckfläche kann, wie in der EP-A-0 508 568 beschrieben, so gestaltet sein, daß die entstehende Kammer bis auf die Zu- und Abläufe in die Kammer nach außen hin geschlossen ist. Im Rahmen der vorliegenden Erfindung ist es jedoch vorteilhaft, wenn die Ausnehmung so gestaltet ist, daß die Kammer von der Oberseite des Zellblockes zugänglich ist, wie dies beispielsweise in der WO 94/18539 beschrieben ist.

Durch die Größe der Ausnehmung, gegebenenfalls auch durch die Dicke der Dichtung, wird im wesentlichen das Volumen der Kammer bestimmt. In der Praxis als günstig haben sich Kammervolumen von 100 bis 300 µl herausgestellt. Da viele der verwendeten Flüssigkeiten zur Bearbeitung der Proben relativ kostspielig sind, wie beispielsweise Antikörperlösungen, Nukleinsäurefragmente usw., wird man bestrebt sein, das Kammervolumen möglichst gering zu halten. Die Fläche der Ausnehmung muß jedoch andererseits groß genug sein, damit die Probenmaterialien auf dem Objektträger sich vollständig im Bereich der Ausnehmung befinden. Wird die Fläche der Ausnehmung zu klein gewählt, so berührt ein Teil der Probe die Andruckfläche oder die Dichtung des Zellblockes. Dies ist unerwünscht, da es zum Verlust von Probenmaterial sowie zu Undichtigkeiten der Kammer führen kann. Die Tiefe der Ausnehmung muß ebenfalls groß genug gewählt werden, damit auf dem Objektträger befindliches Material nicht an der Rückseite der Ausnehmung anliegt, da in diesem Fall der Flüssigkeitstransport durch die Zelle behindert ist. Dementsprechend wird erfindungsgemäß die Tiefe der Ausnehmung so gewählt, daß sie zumindest um einige Mikrometer tiefer ist als die Dicke des Probermaterials. Erfindungsgemäß geeignete Tiefen der Ausnehmung liegen zwischen 10 µm und 500 µm.

Erfindungsgemäß ist es bevorzugt, wenn die Kammer so geformt ist, daß sie an ihrer untersten Stelle eine Verjüngung besitzt, beispielsweise durch eine Krümmung oder Neigung ihres Bodens. Da die Kammer erst durch Zusammenwirken von Ausnehmung und Objektträger entsteht, kann die Krümmung oder Neigung der Bodenfläche durch eine geeignete Form der Ausnehmung erzielt werden. Durch diese Maßnahme besitzt die Kammer einen Bereich, in dem Flüssigkeiten aus der Kammer zusammenlaufen. Es ist günstig, in diesem Bereich der Ausnehmung eine Öffnung anzubringen, die mit einem Fluidkanal verbunden ist. Durch diesen Fluidkanal können dann Flüssigkeiten aus der Zelle annähernd vollständig entnommen werden.

### ** Andruckvorrichtung

Zum Andrücken des Objektträgers an die Andruckfläche des Zellblockes kann beispielsweise die in WO 94/18539 beschriebene Federanordnung oder auch die in den Figuren 2 und 13 dargestellten Andruckvorrichtungen der EP-A-0 508 568 verwendet werden. Im Rahmen der vorliegenden Erfindung ist es jedoch bevorzugt, zum Andruck des Objektträgers eine Andruckplatte mit einem Höhenprofil zu verwenden, die an späterer Stelle detaillierter beschrieben wird.

### ** Fluidkanal mit Anschlußtrichter

Ein wesentliches Merkmal der vorliegenden Vorrichtung ist ein Fluidkanal, der an eine Öffnung innerhalb der Ausnehmung des Zellblockes angeschlossen ist. Bevorzugt befindet sich die Öffnung an der tiefsten Stelle der Ausnehmung. Über diesen Fluidkanal ist es möglich, die Kammer des Zellblockes mit Flüssigkeiten zu befüllen oder zu entleeren. Es hat sich gezeigt, daß durch die Anbringung der Öffnung im unteren Bereich der Ausnehmung, insbesondere am tiefsten Punkt der Ausnehmung, die Bildung von Luftblasen innerhalb der Kammer vermieden sowie eine möglichst vollständige Entleerung der Kammer gewährleistet werden kann. In der Praxis haben sich Durchmesser des Fluidkanals von 1 bis 2 mm als günstig erwiesen. Es ist ebenfalls günstig, wenn im gesamten Verlauf des Fluidkanales und auch im Bereich der Kammeröffnung keine Kanten auftreten, sondern diese Bereiche ausgerundet sind.

Erfindungsgemäß wird der genannte Fluidkanal über einen Anschlußtrichter mit Flüssigkeiten befüllt bzw. entleert. Anschlußtrichter und Fluidkanal sind so angeordnet, daß Flüssigkeiten nicht ohne äußere Einwirkung aus der Kammer herausfließen können. Vorteilhaft wird der Fluidkanal so gelegt, daß sich ein Teil oberhalb des maximalen Flüssigkeitsniveaus in der Kammer befindet. An diesen Teil schließt sich der Anschlußtrichter an. Auf diese Weise kann gewährleistet werden, daß Flüssigkeiten aus der Kammer nicht in den Anschlußtrichter fließen und hier zu Verschmutzungen führen.

### ** Pipettiervorrichtung mit Anschlußspitze

Die Entnahme von Flüssigkeit aus der Kammer und gegebenenfalls auch die Befüllung der Kammer mit Flüssigkeit kann über eine Pipettiervorrichtung erfolgen, die eine Anschlußspille besitzt. Die Anschlußspitze ist so beschaffen, daß sie dichtend in den Anschlußtrichter paßt. Durch dieses System aus Anschlußtrichter und Anschlußspitze können lange Schlauchverbindungen in der Vorrichtung vermieden sowie eine Vielzahl von Ventilen und Pumpen eingespart werden.

Pipettiervorrichtungen, die in einer erfindungsgemäßen Vorrichtung verwendet werden können, sind im Stand der Technik hinlänglich bekannt. Insbesondere sind hier die in klinischen Analysegeräten verwendeten Pipettiervorrichtungen zu nennen. Die Pipettiervorrichtung beinhaltet eine Pipettiernadel und mindestens eine Pumpe, die mit der Pipettiernadel verbunden ist. Ebenfalls besitzt die Pipettiervorrichtung eine Bewegungsvorrichtung, mit der die Pipettiernadel im Raum bewegt werden kann. Zusätzlich zu in Analysegeräten verwendete Pipettiervorrichtungen besitzt eine erfindungsgemäße Pipettiervorrichtung eine Anschlußspitze, die an der Pipettiernadel angebracht ist. Erfindungsgemäß ist es vorteilhaft, wenn die Pipettiernadel mit der Bewegungsvorrichtung über eine Feder verbunden ist. Es kann auf diese Weise erreicht werden, daß die Anschlußspitze über die Feder in den Anschlußtrichter gepreßt wird, um so einen dichtenden Sitz zu erzielen. Zur Gewährleistung einer dichten Verbindung zwischen Pipettiervorrichtung und Anschlußtrichter ist die Anschlußspitze so geform, daß sie dichtend in den Anschlußtrichter eingepaßt werden kann. Diese Anschlußspitze kann beispielsweise die Form eines Kegels, Kegelstumpfes oder einer runden Platte besitzen. Vorteilhaft besteht die Anschlußspitze zumindest teilweise aus einem elastischen Material oder ist mit einem elastischen Material beschichtet. Dieses elastische Material befindet sich vorzugsweise an Stellen, an denen die Anschlußspitze und der Anschlußtrichter aneinander anliegen.

### ** Befüllung der Zelle von oben

Die Funktionsweise der erfindungsgemäßen Vorrichtung kann weiterhin verbessert werden, wem die Ausnehmung im Zellblock so gestaltet ist, daß sich die entstehende Kammer zur Oberseite hin trichterförmig verbreitert. Auf diese Weise ergibt sich an der Kammeroberseite eine trichterförmige Öffnung, durch welche die Kammer von oben mit Flüssigkeiten befüllt werden kann. Bei einer vorteilhaften Arbeitsweise mit der erfindungsgemäßen Vorrichtung werden Flüssigkeiten von der Oberseite in die Kammer gegeben und es erfolgt durch den Fluidkanal, der an die Kammer angeschlossen ist, lediglich eine Entnahme von Flüssigkeit. Bei dieser Arbeitsweise erfolgt die Flüssigkeitsbewegung unidirektional, so daß Verschleppungen, die bei einer bidirektionalen Arbeitsweise auftreten, vermieden werden können.

### ** Zusätzliche Fluidkanäle

Wenngleich auch Zellen mit einem Fluidkanal, der in einen Anschlußtrichter mündet, im Zentrum der Erfindung stehen, so sollen Verbindungen der Zellen über Schlauchsysteme, in denen Flüssigkeiten mit Pumpen transportiert werden, nicht ausgeschlossen sein. Die Kammern der Zelle können ein oder mehrere Öffnungen aufweisen, die in Fluidkanäle münden, wobei die Fluidkanäle über Ventile gesteuert werden können und Flüssigkeiten durch eine oder mehrere Pumpen in einem Netz der Fluidkanäle transportiert werden. Zum Aufbau eines solchen Netzes aus Fluidkanälen und seine Ansteuerung wird hiermit vollinhaltlich auf EP-A-0 508 568 Bezug genommen.

### ** Überlauf

Zur Steigerung der Handhabungssicherheit ist es ebenfalls vorteilhfat, wem sich hinter der Andruckvorrichtung ein Überlauf befindet, der Flüssigkeit aufnehmen kann, die über die Oberkante des Objektträgers hinausgetreten ist. Der Überlauf sollte seinerseits eine Öffnung besitzen, durch die Flüssigkeit ablaufen kann oder abgezogen wird. Die Geometrie der Zelle sollte so gewählt werden, daß die Oberkante des Objektträgers unterhalb des Trichters liegt, so daß Flüssigkeit nicht über den Trichter aus der Zelle entweichen kann.

### ** Reservoir

Wie bereits erwähnt, werden als Arfärbeflüssigkeiten auch Lösungen von Antikörpern oder anderen empfindlichen biologischen Materialien eingesetzt. Es ist bekannt, daß Lösungen dieser Stoffe nur eine relativ geringe Haltbarkeit aufweisen. Es hat sich herausgestellt, daß die Haltbarkeit der Substanzen stark erhöht werden kann, wenn sie in einer festen Zubereitung vorliegen. Dies ist beispielsweise bei einer Einbettung von Antikörpern in einer Gelatinematrix oder in Traubenzucker der Fall. Aus der Literatur ist bekannt, daß insbesondere solche Materialien, die eine Kristallisationsverzögerung hervorrufen, zu einer Steigerung der Haltbarkeit empfindlicher biologischer Materialien beitragen. Eine weitere Aufgabe der Erfindung war es daher, eine Vorrichtung zur Verfügung zu stellen, die den Einsatz von festen Reagenzzubereitungen ermöglicht.

Erfindungsgemäß ist es vorgesehen, daß in Nachbarschaft zur Zelle ein zusätzliches Reservoir angeordnet ist, das mit der Kammer der Zelle nicht kommuniziert. Dieses Reservoir kann zur Aufbewahrung von Flüssigkeiten sowie zur Zubereitung von Lösungen aus Flüssigkeiten und festen Zubereitungen von biologischen Materialien verwendet werden. In dieses Reservoir kann beispielsweise eine Pastille eingebracht werden, in der das Reagenz eingekapselt ist. Durch Zugabe von Flüssigkeit in das Reservoir wird eine Lösung frisch hergestellt, die in einem Folgeschritt aus dem Reservoir entnommen und in die Kammer gegeben wird. Die Auflösung der festen Zubereitung des biologischen Materials kann ohne äußere Einwirkung erfolgen, es ist jedoch vorteilhaft, wenn die Auflösung mechanisch, z. B. durch einen Rührer oder durch Versetzen der Pipettenspitze in Vibrationen, unterstützt wird. Es hat sich zur Auflösung auch als vorteilhaft erwiesen, mit einer Pipettiervorrichtung Flüssigkeit aus dem Reservoir wiederholt abzuziehen und in das Reservoir zurückzugeben, um eine Bewegung der Flüssigkeit zu erzeugen, die zu einer beschleunigten Auflösung führt.

### ** Bildauswertung

Erfindungsgemäß kann es ebenfalls vorgesehen werden, daß auf der dem Kammerblock abgewandten Seite ein Mikroskop oder eine elektronische Kamera angeordnet ist, mit der Veränderungen auf dem Objektträger beobachtet werden können. Es ist auch möglich, den Kammerblock aus transparenten Material, z. B. Plexiglas, zu fertigen oder innerhalb des Zellblockes Fenster zur Beobachtung der Probe auf dem Objektträger vorzusehen. Die genannten Beobachtungsvorrichtungen können verwendet werden, um die Endauswertung der bearbeiteten Probe vorzunehmen oder um zu kontrollieren, wie weit die Anfärbung des Probenmaterials vorangeschritten ist. Diese Kontrolle kann genutzt werden, um den Anfärbevorgang zu einem geeigneten Zeitpunkt zu beenden.

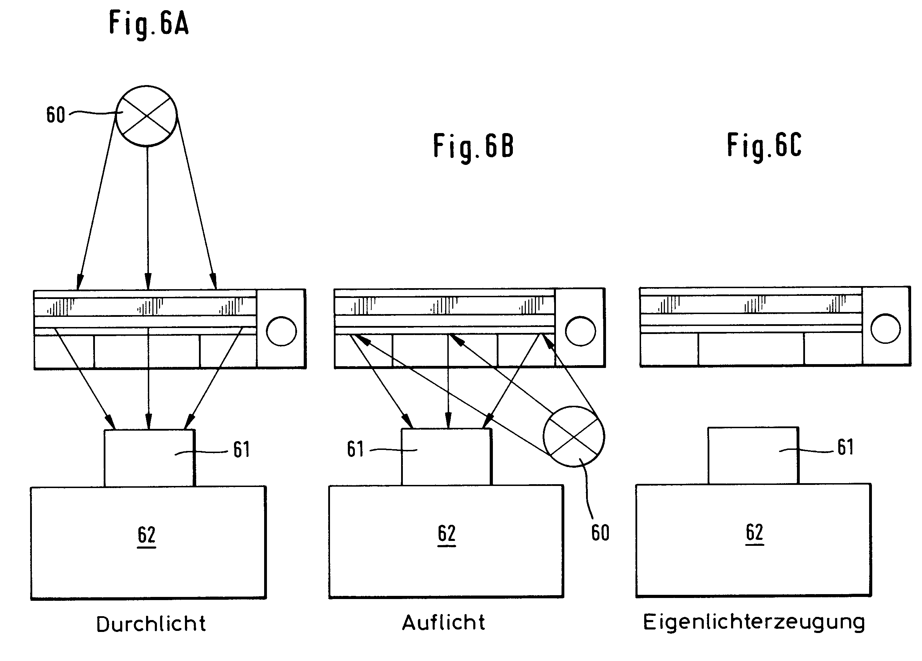

Die Figuren 6A, 6B und 6C zeigen Prinzipskizzen von möglichen Anordnungen, mit denen eine Beobachtung des Anfärbevorganges in der Zelle möglich ist.

Figur 6A zeigt eine Durchlichtanordnung. Von der Lichtquelle (60) ausgehende Strahlung fällt auf die Rückseite der Zelle, durchdringt die Andruckvorrichtung, den Objektträger und den Zellblock. Die aus dem Zellblock austretende Strahlung wird durch ein Linsensystem (61) gebündelt und auf einen Detektor (62) geleitet. Es versteht sich von selbst, daß die Komponenten der Zeile, die bei dieser Durchlichtanordnung durchstrahlt werden, hinreichend lichtdurchlässig sein müssen. Der Detektor kann ein Detektortyp sein, der Strahlung integral auswertet (z. B. Photomultiplier oder photovoltaisches Element) oder es kann ein Detektor gewählt werden, der eine Ortsauflösung ermöglicht (z. B. CCD-Kamera).

Figur 6B zeigt eine Anordnung, bei der Licht der Lichtquelle (60) durch den Zellblock eingestrahlt und von dem Objektträger oder der Andruckvorrichtung reflektiert wird. Um dies zu ermöglichen, kann die Objektträgerunterseite oder die Andruckfläche der Andruckvorrichtung verspiegelt sein. Reflektiertes Licht wird, wie bereits für Figur 6A erläutert, durch ein Linsensystem (61) aufbereitet und dann einem Detektor (62) zugeführt.

Figur 6C zeigt eine Anordnung, bei der in der Zelle Licht, z. B. durch Chemilumineszenz oder Elektrochemilumineszenz, erzeugt wird. Dieses Licht dringt durch den Zellblock, wird durch ein Linsensystem (61) aufbereitet und fällt dann auf den Detektor (62).

### ** Anordnung von Zellen in Racks

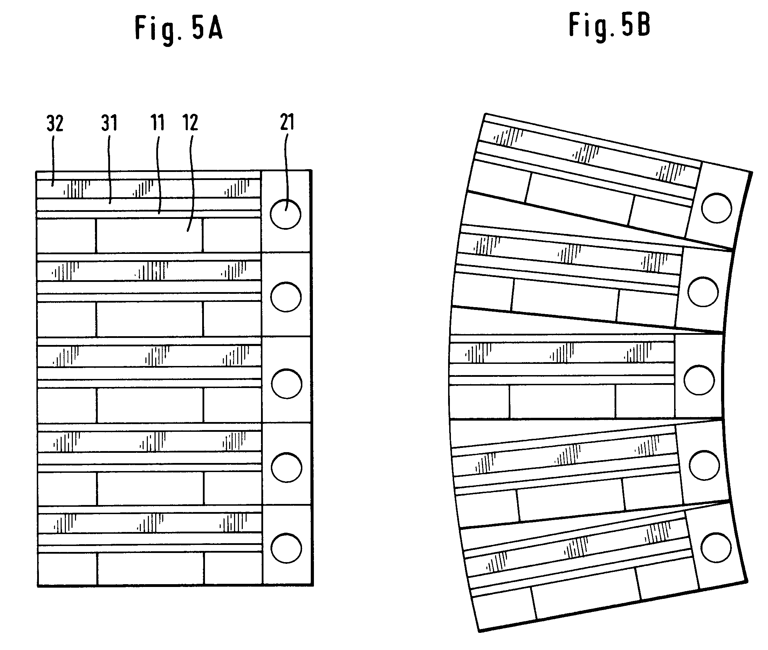

Erfindungsgemäße Zellen sind, da sie nicht unbedingt über Schlauchsysteme an Pumpen und Reagenzbehälter angeschlossen sein müssen, autonom. Daher ist man bei der Anordnung der Zellen und gegebenenfalls ihres Transports geringeren Restriktionen ausgesetzt, wie dies für Zellen des Standes der Technik der Fall ist. Es ist möglich, die erfindungsgemäßen Zellen zu Verbänden zusammenzufassen, die gemeinsam transportiert werden. Eine solche Vorgehensweise hat sich bereits für die Proben- und Reagenzgefäße in klinischen Analysegeräten bewährt. In Figur 5 sind zwei mögliche Formen der Anordnung von Zellen dargestellt.

In Figur 5A sind die Zellen linear angeordnet, während sie in Figur 5B in Form eines Kreissegmentes angeordnet sind. Die Zusammenfassung der Zellen kann erfolgen, indem die Zellen fest miteinander verbunden sind oder indem sie sich gemeinsam in einem Gestell befinden. Ein solches Gestell, gegebenenfalls bestückt mit Zellen, wird im Bereich der klinischen Chemie als Rack bezeichnet.

Wenn die Anordnung der Zellen so erfolgt, daß zwischen den Zellen Zwischeräume entstehen, so kann die Temperierung der Zellen in einfacher Weise dadurch erzielt werden, daß die Anordnung in ein Wasser- oder Luftbad eingetaucht wird.

Die Verbände von Zellen sind insbesondere vorteilhaft, weil sie eine einfache Adaption der für klinische Analysegeräte bekannten Technologie an die Erfordernisse zur Bearbeitung von Proben auf Objektträgern ermöglicht. Aus den bereits langfristig in der Praxis bewährten Analysatoren können dabei Transportvorrichtungen, Pipettiervorrichtungen, die Reagenzlogistik usw. weitestgehend unverändert übernommen werden.

### * Figuren

Bevorzugte Ausführungsformen der Erfindung sind in den Figuren dargestellt.
- Figur 1:: Vorrichtung zur Bearbeitung von Proben auf Objektträgern
- Figur 2:: Zellblock mit Andruckvorrichtung im Querschnitt
- Figur 3:: Andruckplatten
- Figur 4:: Vorrichtungen mit Niederdruckelementen
- Figur 5:: Anordnungen von Zellen
- Figur 6:: Anordnungen zur Beobachtung des Anfärbevorganges in der Zelle

### ** Ausführungsbeispiel für Zelle mit Anschlußtrichter

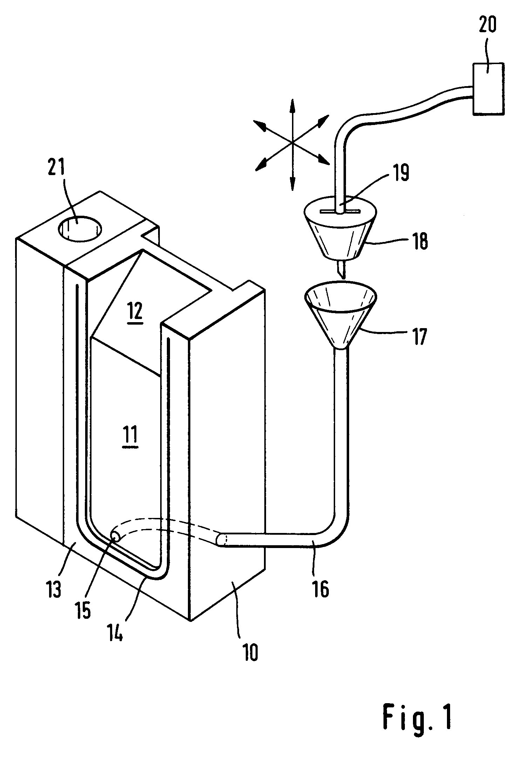

Eine Vorrichtung zur Bearbeitung von Proben gemäß der Erfindung ist in Figur 1 dargestellt. Figur 1 zeigt einen Zellblock (10) aus massivem Aluminium, in den eine Ausnehmung (11) eingefräst ist. An die Oberkante der Ausnehmung (11) schließt sich eine abgeschrägte Fläche (12) an. Die Kammer (10) besitzt eine Andruckfläche (13), die die Ausnehmung (11) U-förmig umgibt. Die Ebenen der Andruckfläche (13) und der Ausnehmung (11) sind um ... mm parallel gegeneinander verschoben. Auf der Andruckfläche (13) befindet sich eine Dichtung (14), die aus einem Sillikongummi besteht, das in eine Rille der Andruckfläche (13) eingeklebt ist. Zur Bearbeitung von Proben wird ein Objektträger gegen die Dichtung (14) gepreßt, so daß sich zwischen Objektträger und Zellblock (10) aufgrund der Ausnehmung (11) eine Kammer ergibt. An der Unterseite der Kammer befindet sich die Öffnung (15), an die ein Fluidkanal (16) angeschlossen ist. Der Fluidkanal mündet seinerseits in den Anschlußtrichter (17). Ein Befüllen und Entleeren der Kammern kann erfolgen, indem eine Anschlußspitze (18) in den Anschlußtrichter (17) eingepreßt wird und mit der Pipettiernadel (19) Flüssigkeit zugegeben oder abgezogen wird. Der Anschlußtrichter (17) kann aus einer Vielzahl von Materialien gefertigt sein, insbesondere aus Metall oder aus Kunststoffen. Die Anschlußspitze (18) besteht vorteilhaft aus einem elastischen Material oder ist zumindest teilweise mit elastischen Material beschichtet. Als Materialien für die Anschlußspitze (18) sind beispielsweise Gummi und Silikongummi geeignet. Um ein Verrutschen der Anschlußspitze (18) auf der Pipettiernadel (19) zu verhindern, besitzt die Pipettiernadel (19) eine Halterung, die im dargestellten Beispiel aus einer Querverstrebung an der Pipettiernadel besteht. Die Pipettiernadel (19) kann über eine Bewegungsvorrichtung (nicht dargestellt) im Raum bewegt werden. Die Pipettiernadel ist weiterhin mit einer Pumpe (20) verbunden.

In Nachbarschaft zu dem Zellblock (10) befindet sich ein Reservoir (21), das mit der Kammer im Zellblock nicht verbunden ist. Dieses Reservoir dient dazu, Flüssigkeiten aufzunehmen oder Lösungen aus Flüssigkeiten und festen Reagenzzubereitungen herzustellen.

### ** Bearbeitungsverfahren

Zur Erfindung gehört weiterhin ein Verfahren zur Bearbeitung von Proben auf Objektträgern mit Flüssigkeiten in einer Vorrichtung gemäß Anspruch 1, das die folgenden Schritte umfaßt:
- der mit Probe versehene Objektträger wird in die Zelle eingebracht,
- eine Flüssigkeit wird von oben in die nach oben geöffnete Kammer oder über den Fluidkanal in die Kammer gegeben,
- die Flüssigkeit wird mit der Pipettiervorrichtung über den Fluidkanal aus der Kammer abgezogen.

Das Einbringen des Objektträgers in die Zelle wird in der Regel manuell erfolgen. Es kann jedoch auch vorgesehen werden, daß der Objektträger über einen Roboterarm in die Zelle transportiert wird.

Das Einführen von Flüssigkeit in die Kammer kann prinzipiell auf zwei Wegen erfolgen. Bei der ersten Vorgehensweise wird die Flüssigkeit von der Oberseite in die nach oben geöffnete Kammer gegeben. Für diese Ausführung ist es vorteilhaft, wenn die Kammer an ihrer Oberseite verbreitert ist, so daß die Flüssigkeitszugabe vereinfacht wird. Bei einem zweiten Weg wird Flüssigkeit über den Fluidkanal (16) in die Kammer gegeben. Dies erfolgt, indem zunächst Flüssigkeit in die Pipettiernadel (19) aufgezogen wird, die Anschlußspitze (18) in den Anschlußtrichter (17) gepreßt wird und die Flüssigkeit in der Pipettiernadel (19) mittels der Pumpe (20) durch die Fluidkanal (16) in die Kammer gepreßt wird. Die zweite Vorgehensweise besitzt den Vorteil, daß die Bildung von Gasblasen in der Kammer weitestgehend vermieden wird.

Während sich die Flüssigkeit in der Kammer befindet, kommt die Probe auf dem Objektträger mit dieser Flüssigkeit in Kontakt. Die Kontaktzeit kann entweder vorbestimmt sein oder individuell für die jeweilige Probe gewählt werden. Vorteilhaft kann die Probe während der Einwirkzeit, z. B. durch ein Mikroskop, eine Kamera oder mit dem unbewaffneten Auge beobachtet werden, so daß die Einwirkzeit aufgrund der bereits erfolgten Anfärbung oder andersgearteten Veränderung der Probe gewählt werden kann.

Während sich die Flüssigkeit in der Kammer befindet, kann die Kammer über den Zellblock nach Bedarf geheizt oder gekühlt werden. Zur Durchfürung z. B. einer in-situ-PCR können die Aufheiz- und Abkühlschritte auch aufeinanderfolgend stattfinden.

Es hat sich erfindungsgemäß als vorteilhaft herausgestellt, wenn die Flüssigkeit in der Kammer während der Einwirkzeit etwas bewegt wird. Dies kann erfolgen, indem über den Fluidkanal (16) mittels der Pipettiervorrichtung Druckveränderungen auf die Kammer ausgeübt werden.

### * Andruckplatte mit Höhenprofil

Die in Figur 1 dargestellte Zelle kann zusammen mit den beispielsweise in EP-A-0 508 568 und WO 94/18539 beschriebenen Andruckvorrichtungen zum Andruck des Objektträgers an den Zellblock betrieben werden. Zur vorliegenden Erfindung gehört jedoch ebenfalls ein neuer Andruckmechanismus, der eine Andruckplatte mit einem Höhenprofil beinhaltet. Die neue Andruckvorrichtung besitzt den Vorteil, daß sie kostengünstig ist, eine geringe Bautiefe aufweist und weiterhin ein kräftefreies Einsetzen des Objektträgers in die Zeile gestattet.

Zur Erfindung gehört eine Vorrichtung zur Bearbeitung von Proben auf Objektträgern mit Flüssigkeiten, die die folgenden Elemente beinhaltet:
- eine Zelle mit einem Zellblock, der eine Andruckfläche besitzt, in der sich eine Ausnehmung befindet und
- eine Andruckvorrichtung zum Andruck eines in der Zelle befindlichen Objektträgers an die Andruckfläche des Zellblocks, in der Weise, daß sich aufgrund der Ausnehmung im Zellblock eine Kammer zwischen Zellblock und Objektträger ausbildet,
- wobei die Andruckvorrichtung eine Andruckplatte mit einem Höhenprofil auf der dem Zellblock abgewandten Seite sowie
   Federelemente, die gegen das Höhenprofil der Andruckplatte drücken besitzt.

Die Andruckplatte ist innerhalb der Zelle im wesentlichen parallel zur Andruckfläche des Zellblockes angeordnet. Auf der dem Zellblock abgewandten Seite besitzt die Andruckplatte ein Höhenprofil, so daß die Platte verschiedene Dicken aufweist. Auf die Rückseite der Andruckplatte, d. h. auf der Seite des Höhenprofils befinden sich Federelemente. Die Federelemente drücken bei bestimmten Positionen der Andruckplatte auf die Andruckplatte, so daß diese ihrerseits einen Objektträger an die Andruckfläche der Zelle drückt.

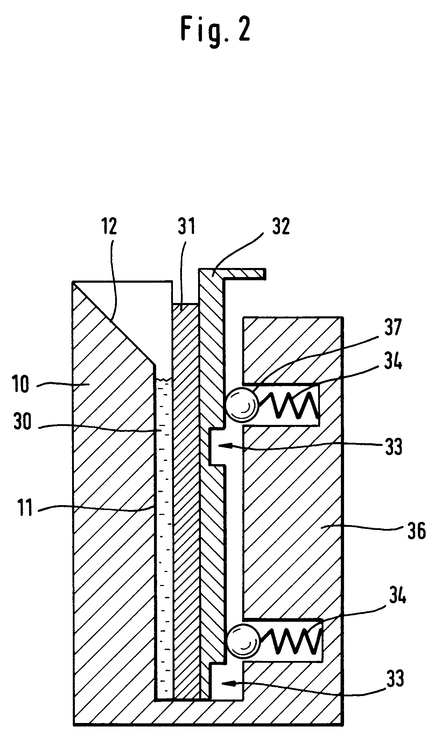

Figur 2 zeigt einen Querschnitt durch den in Figur 1 dargestellten Zellblock. Zusätzlich ist die neuartige Andruckvorrichtung zu erkennen. Figur 2 zeigt, wie zwischen der Fläche (11) der Ausnehmung und dem Objektträger (31) die in der Kammer befindliche Flüssigkeit (30) eingeschlossen wird. Auf der dem Zellblock abgewandten Seite des Objektträgers (31) befindet sich die Andruckplatte (32). Auf die Andruckplatte (32) wirken Federelemente (34) ein, die ihrerseits an der Halterung (36) befestigt sind. Die Federelemente bestehen im konkret dargestellten Fall aus Stahlfedern, an deren Ende eine Metallkugel (37) befestigt ist.

Durch die Stahlfedern wird die Metallkugel (37) an die Halteplatte gedrückt. In einer relativen Lage der Halteplatte (32) und der Federelemente (34) zueinander, wie in Figur 2 dargestellt, wird die Halteplatte gegen den Objektträger gedrückt, der seinerseits an die Andruckplatte (13) gedrückt wird. Wird die Andruckplatte (32) aus der dargestellten Position nach oben bewegt, so gelangen die Federelemente in die Ausnehmungen (33). Aufgrund der geringeren Dicke der Andruckplatte (32) in diesen Bereich sind die Federelemente (34) entspannt und üben keine Kraft auf die Andruckplatte (32) aus. Damit wird auch der Andruck des Objektträgers (31) an die Andruckfläche (13) aufgehoben, so daß der Objektträger (31) kräftefrei aus der Zelle entnommen werden kann.

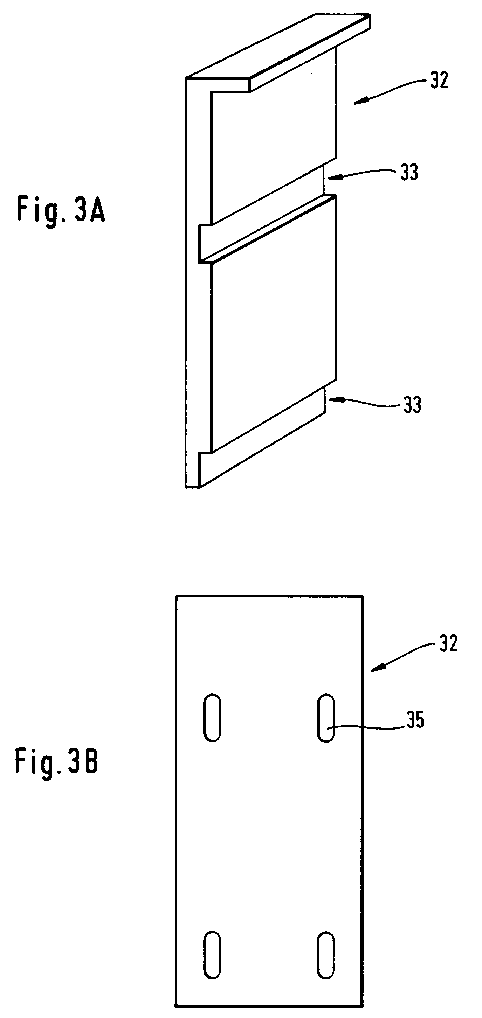

Die Figuren 3A und 3B zeigen zwei verschiedene Ausführungsformen der Andruckplatte (32). Bei beiden Ausführungsformen handelt es sich um Andruckplatten, deren Höhenprofil zwei Dicken aufweist. In dem ersten (dem kleineren) Dickenbereich ist der Abstand zwischen Andruckfläche des Zellblockes und Andruckplatte so groß, daß ein Objektträger zwischen Andruckplatte und Andruckfläche nicht gegen die Andruckfläche gedrückt wird. Im zweiten Dickenbereich der Andruckplatte ist der Abstand so groß, daß ein zwischen Andruckplatte und Andruckfläche befindlicher Objektträger über die Andruckplatte durch die Federelemente gegen die Andruckfläche gedrückt wird. Die in Figur 3a dargestellte Andruckplatte entspricht der aus Figur 2. In Figur 3A ist zu erkennen, wie die Ausnehmungen (33) auf der Rückseite der Andruckplatte (32) angeordnet sind.

Figur 3B zeigt eine Andruckplatte, die der in Figur 3A gezeigten relativ ähnlich ist. Die in Figur 3B dargestellte Andruckplatte (32) weist auf ihrer Rückseite vier Vertiefungen (35) auf. Die Vertiefungen (35) übernehmen im wesentlichen die gleiche Funktion wie die Ausnehmungen (33). Befinden sich die Federelemente (34) oberhalb oder unterhalb der Vertiefungen (35), so ist die wirksame Dicke der Andruckplatte (32) relativ groß und die Andruckplatte (32) bewirkt eine Halterung des Objektträgers. Befindet sich die Andruckplatte (32) jedoch in einer Position, in der die Federelemente (34) in die Vertiefungen (35) eingreifen, so sind die Federelemente entspannt und es findet kein Andruck des Objektträgers statt. Die Ausführungsform der Andruckplatte (32) gemäß Figur 3b bietet den Vorteil, daß die Platte seitlich gehaltert wird, wenn sich die Federelemente in den Vertiefungen (35) befinden. Weiterhin besitzt diese Ausführungsform den Vorteil, daß beim Herausziehen der Platte aus der Zelle ein Widerstand überwunden werden muß.

Die in den Figuren 3A und 3B dargestellten Ausführungsformen sollen lediglich exemplarisch für mögliche Andruckplatten sein. Erfindungsgemäß ist es vorgesehen, daß die Andruckplatte (32) auf ihrer Rückseite ein Höhenprofil aufweist, in dem Bereiche unterschiedlicher Dicke vorhanden sind. Bei dem einfachsten Fall einer erfindungsgemäßen Halteplatte ist die Rückseite der Halteplatte planar und besitzt keine Vertiefungen oder Dickenunterschiede. Bei dieser einfachen Ausgestaltung der Halteplatte gibt es keine Positionen der Halteplatte, in denen der Objektträger nicht angedrückt wird, sofern die Halteplatte in die Zelle eingesetzt ist. Bei Verwendung einer solchen Halteplatte wird der Objektträger zunächst in die Zelle eingestellt und darauf die Halteplatte hinter den Objektträger geschoben. Gegenüber den Blattfedern der WO 94/18539 besitzt bereits diese einfachste Ausgestaltung der Halteplatte den Vorteil, daß der Objektträger kräftefrei in die Zelle eingebracht und Glasbruch somit vermieden wird. Weiterhin bietet die Halteplatte den Vorteil, daß die punktuellen Kräfte der Federelemente über die starre Platte verteilt auf den Objektträger abgegeben werden, was zu einem gleichmäßigeren Andruck des Objektträger führt.

Die Ausgestaltung der Federelemente kann vom Fachmann ebenfalls variiert werden. Es können beispielsweise statt der dargestellten Spiralfedern auch Gasdruckfedern oder dergleichen eingesetzt werden. Auch ein Einsatz von Blattfedern, wie in WO 94/18539, ist mit den erfindungsgemäßen Halteplatten kompatibel. Während in WO 94/18539 jedoch Federn beschrieben werden, die den Objektträger lediglich in mittlerer Höhe andrücken, ist es erfindungsgemäß bevorzugt die Federelemente so anzuordnen, daß sie in zwei oder noch besser vier Bereichen gegen die Halteplatte drücken. In Figur 2 ist zu erkennen, daß die Federelemente bevorzugt im oberen und unteren Bereich des Objektträgers angeordnet sind. Weiterhin ist es vorteilhaft, die Halteplatte an vier Stellen anzudrücken, wobei die Stellen im Bereich der vier Ecken des Objektträgers angeordnet sind.

Ebenfalls die am Ende der Federn befindlichen Metallkugeln können gegen andere Elemente, wie z. B. Kunststoffstifte, ausgetauscht werden.

Neben der kostengünstigen Realisierung der erfindungsgemäßen Haltevorrichtung und ihrer geringen Bautiefe besitzt diese Haltevorrichtung weiterhin den Vorteil, daß die Andruckplatte aus der Zelle entnehmbar gestaltet werden kann. So ist beispielsweise eine Reinigung der Andruckplatte oder ihr schneller Austausch gegen eine andere Andruckplatte möglich.

Ein weiterer Vorteil der Andruckplatte liegt darin, daß die Kraftübertragung auf den Objektträger gleichmäßig erfolgt. Die punktuelle Krafteinwirkung auf die Andruckplatte wird durch die Formstabilität der Andruckplatte verteilt auf den Objektträger (31) abgegeben.

Aufgrund dieser gleichmäßigeren Verteilung wird der Objektträger mechanisch weniger belastet und Undichtigkeiten zwischen Objektträger und Dichtung können vermieden werden.

Als Material für die Andruckplatte sind insbesondere Kunststoffe geeignet, die im Spritzgußvefahren verarbeitet werden können. Prinzipiell können jedoch auch Metalle, die ausreichend resistent gegenüber den verwendeten Flüssigkeiten sind, verwendet werden. Bei den genannten Materialien sind solche bevorzugt, die eine realtiv hohe Steifigkeit aufweisen, damit der durch die Federelemente auf die Andruckplatte ausgeübte Druck von der Andruckplatte verteilt abgegeben werden kann.

In Fällen, in denen eine Beobachtung der Probe von der Rückseite des Objektträgers stattfinden soll, können solche Materialien für die Andruckplatte verwendet werden, die durchsichtig sind. Insbesondere kommen hierfür Kunststoffe, wie Polymethylmethacrylat und Polystyrol in Frage.

Zur besseren Handhabbarkeit kann die Andruckplatte in ihrem oberen Bereich eine Griffplatte aufweisen, die beispielsweise Rillen besitzt. Die Griffplatte kann auch, wie in Figur 2 und Figur 3A dargestellt, gegenüber der Halteplatte gekippt sein, um so für den Benutzer besser handhabbar zu sein.

### ** Bearbeitungsverfahren mit Andruckplatte

Ein Verfahren zur Bearbeitung von Proben auf Objektträgern unter Verwendung der neuartigen Andruckvorrichtung besitzt vorzugsweise die folgenden Schritte:
- Einlegen eines Objektträgers in die Zelle,
- vertikale Bewegung der Andruckplatte in eine Position, in der die Andruckplaltte den Objektträger gegen die Andruckfläche drückt,
- Füllen der Kammer mit Flüssigkeit,
- Entnahme der Flüssigkeit aus der Kammer
- Entnahme des Objektträgers aus der Zelle.

Bei Verwendung einer entnehmbaren Andruckplatte kann dem beschriebenen Verfahren ein Schritt vorangehen, bei dem die Andruckplatte in die Zelle eingelegt wird.

Die Verfahren zur Bearbeitung beginnen damit, daß sich die Andruckplatte in einer Position befindet, in der der Abstand zwischen Andruckplatte und Andruckfläche der Zelle so groß ist, daß ein Objektträger ohne wesentlichen Kraftaufwand in die Zelle eingelegt werden kann. Daraufhin wird die Andruckplatte in der Regel nach unten bewegt, wobei auch die Ausnehmungen an der Andruckplatte verschoben werden und ein Andruck der Federelemente an die Andruckplatte erfolgt. Nachdem der Objektträger in diese Position gebracht worden ist, findet die eigentliche Bearbeitung der Proben statt, indem Flüssigkeiten in die Kammer gegeben werden und gegebenenfalls Abkühl- oder Erwärmungsschritte der Kammer durchgeführt werden. Vor Entnahme des Objektträgers aus der Zelle wird die Flüssigkeit aus der Kammer abgezogen. Die Entnahme des bearbeiteten Objektträgers erfolgt, indem die Andruckplatte vertikal bewegt wird. In der Regel wird die Andruckplatte nach oben gezogen, wobei die Ausnehmungen auf der Andruckplatte in die Höhe der Federelemente gelangen und die Andruckkraft der Andruckplatte auf den Objektträger gelöst wird. Der Objektträger kann nunmehr ohne größeren Kraftaufwand aus der Zelle entnommen werden.

### * Niederdruckelement

Bei den im Stand der Technik bekannten Vorrichtungen, die eine Befüllung der Anfarbekammern über ein Pumpensystem vorsehen, besteht das Problem, daß relativ teure Ventile notwendig sind, um einzelne Zellen an das Fluidsystem anzukoppeln oder von diesem abzusperren. Die Notwendigkeit teurer elektrisch regelbarer Ventile konnte durch einen Aspekt der vorliegenden Erfindung beseitigt werden, der ein Niederdruckelement betrifft. In günstiger Weise kann die sowieso notwendige Bewegung des Objektträgers beim Einbringen in die Zelle oder die Bewegung einer erfindungsgemäßen Andruckplatte dazu ausgenutzt werden, ein mechanisches Ventil zu betätigen. Für den Benutzer der Vorrichtung ist somit keine zusätzliche Aktion notwendig.

Du Niederdruckelement gewährleistet, daß Zellen, die nicht zur Bearbeitung von Proben verwendet werden, vom Flüssigkeitskreislauf abgetrennt werden. Dies ist insbesondere vorteilhaft, wenn ein System aus mehreren Bearbeitungsvorrichtungen verwendet wird. Es wird so verhindert, daß teure Reagenzlösungen für Kammern verbraucht werden, in denen sich kein Objektträger befindet.

Die Erfindung betrifft daher eine Vorrichtung zur Bearbeitung von Proben auf Objektträgern mit Flüssigkeiten, die die folgenden Elemente beinhaltet:
- eine Zelle mit einem Zellblock, der eine planare Andruckfläche besitzt, in der sich eine Ausnehmung befindet und
- eine Andruckvorrichtung zum Andruck eines in der Zelle befindlichen Objektträgers an die Andruckfläche des Zellblockes, in der Weise, daß sich aufgrund der Ausnehmung im Zellblock eine Kammer zwischen Zellblock und Objektträger ausbildet, die eine Öffnung besitzt, an die ein Fluidkanal angeschlossen ist, der seinerseits mit mindestens einem Reservoir und einer Pumpvorrichtung verbunden ist
- sowie ein Niederdruckelement, das in seiner Ruhestellung den Fluidkanal gegenüber dem mindestens einen Reservoir und der Pumpvorrichtung absperrt und den Fluidkanal öffnet, wenn es niedergedrückt wird.

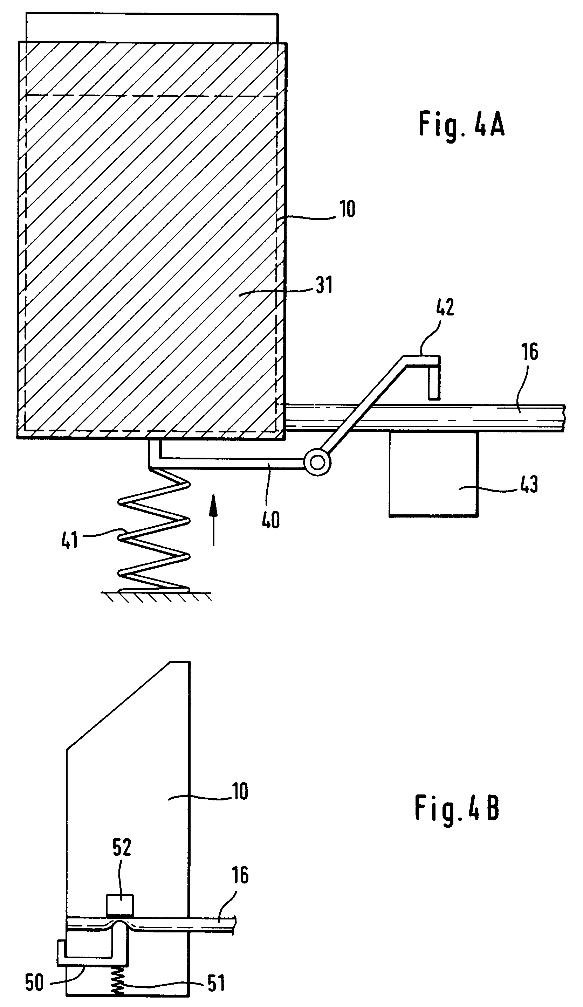

In den Figuren 4A und 4B sind beispielhaft zwei Ausführungsformen angegeben, bei denen die Fluidverbindung der Zelle mit einem Schlauchsystem über erfindungsgemäße Niederdruckelemente gesteuert wird. In Figur 4a ist eine erste Ausführungsform dargestellt, bei der der Hebelarm (40) durch den Objektträger (31) niedergedrückt wird, sobald der Objektträger in die Zelle gestellt wird. Die Unterkante des Objektträgers (31) drückt dabei auf den Hebelarm (40) und überwindet die Spannung der Feder (41). Ein zweiter Hebelarm (42), der mit dem ersten Hebelarm (40) starr verbunden ist, wird durch diese Bewegung nach oben geschoben und öffnet den Fluidkanal (16). Wird der Objektträger (31) aus der Zelle entnommen, so drückt die Feder (41) den Hebelarm (40) nach oben, wodurch der Hebelarm (42) eine Abwärtsbewegung vollführt. Der Fluidkanal (16), der zumindest in dem Bereich unterhalb des Hebelarmes (42) aus einem zusammenquetschbaren Material besteht, wird zwischen Hebelarm (42) und dem Lagerblock (43) zusammengedrückt.

In Figur 4B ist eine zweite Ausführungsform dargestellt, die einen Hebelarm (50) besitzt, der über eine Feder (51) nach oben gedrückt wird und den Fluidkanal (16) gegen den Lagerblock (52) drückt, wobei der Fluidkanal (16) zusammengequetscht wird. Beim Einsetzen eines Objektträgers in die Zelle stößt der Objektträger mit seiner Unterkante auf den Hebelarm (50), wodurch sich der gesamte Hebelarm nach unten bewegt und den Fluidkanal (16) öffnet.

Damit eine Verquetschung des Fluidkanales erfolgen kann, muß der Fluidkanal mindestens im Bereich zwischen den Hebelarmen und dem jeweiligen Lagerblock aus einem zusammenquetschbaren Material bestehen. Geeignete Fluidkanäle können beispielsweise aus Polyethylen oder Silikongummi gefertigt werden.

Bei der Bemessung der Federn (41, 51) ist zu berücksichtigen, daß sie den Fluidkanal (16) einerseits vollständig zusammenquetschen müssen, andererseits nicht so stark sein dürfen, daß es bei Verwendung eines Objektträgers zum Niederdrücken zu Glasbruch kommt.

### Bezugszeichenliste

- (10): Zellblock
- (11): Ausnehmung
- (12): Abschrägung der Ausnehmung
- (13): Andruckfläche
- (14): Dichtung
- (15): Öffnung in Ausnehmung
- (16): Fluidkanal
- (17): Anschlußtrichter
- (18): Anschlußspitze
- (19): Pipettiernadel
- (20): Pumpe
- (21): Reservoir
- (30): Flüssigkeit
- (31): Objektträger
- (32): Andruckplatte
- (33): Ansnehmung
- (34): Federelement
- (35): Vertiefung
- (36): Halterung
- (37): Metallkugel
- (40): Hebelarm
- (41): Feder
- (42): Hebelarm
- (43): Lagerblock
- (50): Hebelarm
- (51): Feder
- (52): Lagerblock
- (60): Lichtquelle
- (61): Linsensystem
- (62): Detektor

## Patentansprüche

1. Vorrichtung zur Bearbeitung von Proben auf Objektträgem mit Flüssigkeiten, beinhaltend
- eine Zelle mit einem Zellblock (10), der eine Andruckfläche (13) besitzt, in der sich eine Ausnehmung (11) befindet und
mit einer Andruckvorrichtung zum Andruck eines in der Zelle befindlichen Objektträgers (31) an die Andruckfläche des Zellblockes, in der Weise, daß sich aufgrund der Ausnehmung im Zellblock eine Kammer zwischen Zellblock und Objektträger ausbildet, wobei in der Ausnehmung des Zellblockes mindestens eine Öffnung (15) vorhanden ist, die in einen Fluidkanal (16) einmündet,
- einen Anschlußtrichter, der mit dem Fluidkanal verbunden ist sowie
- mindestens eine Pipettiervorrichtung mit einer Anschlußspitze (18), die dichtend in den Anschlußtrichter paßt.

2. Vorrichtung gemäß Anspruch 1, bei der die Ausnehmung im Zellblock an ihrem oberen Ende verbreitert ist, so daß beim Anliegen eines Objektträgers an der Andruckfläche eine an ihrem oberen Ende trichterförmig verbreiterte Kammer entsteht.

3. Vorrichtung gemäß Anspruch 1, die mindestens ein von oben zugängliches Reservoir (21) besitzt, das mit der Kammer der Zelle nicht kommuniziert.

4. Vorrichtung gemäß Anspruch 1, bei der die Bodenfläche der Kammer gekrümmt oder geneigt ist und sich die Öffnung (15) in der Ausnehmung (11) des Zellblockes (10) an der tiefsten Stelle der Ausnehmung befindet.

5. Vorrichtung gemäß Anspruch 1, bei dem die Anschlußspitze (18) der Pipettiervorrichtung zumindest teilweise aus einem elastischen Material besteht oder mit einem elastischen Material beschichtet ist.

6. Vorrichtung gemäß Anspruch 1, die ein Mikroskop oder eine Kamera zur Beobachtung von auf dem Objektträger befindlichen Proben beinhaltet.

7. System beinhaltend mehrere der Vorrichtungen gemaß Anspruch 1, bei dem die einzelnen Vorrichtungen in einem Gestell zusammengefaßt sind.

8. Verfahren zur Bearbeitung von Proben auf Objektträgern mit Flüssigkeiten in einer Vorrichtung gemäß Anspruch 1, mit den Schritten:
- der mit Probe versehene Objektträger wird in die Zelle eingebracht,
- eine Flüssigkeit wird von oben in die nach oben geöffnete Kammer oder über den Fluidkanal in die Kammer gegeben,
- die Flüssigkeit wird mit der Pipettiervorrichtung über den Fluidkanal aus der Kammer abgezogen.

9. Vorrichtung zur Bearbeitung von Proben auf Objektträgern mit Flüssigkeiten, beinhaltend
- eine Zelle mit einem Zellblock (10), der eine Andruckfläche (13) besitzt, in der sich eine Ausnehmung (11) befindet und
- eine Andruckvorrichtung zum Andruck eines in der Zelle befindlichen Objektträgers an die Andruckfläche des Zellblockes, in der Weise, daß sich aufgrund der Ausnehmung im Zellblock eine Kammer zwischen Zellblock und Objektträger ausbildet,
- wobei die Andruckvorrichtung eine Andruckplatte (32) mit einem Höhenprofil auf der dem Zellblock abgewandten Seite sowie
- Federelemente (34), die gegen das Höhenprofil der Andruckplatte drücken, besitzt.

10. Vorrichtung gemäß Anspruch 9, bei der die Andruckplatte aus der Zelle entnehmbar ist.

11. Vorrichtung gemäß Anspruch 9, mit einer Andruckplatte, deren Höhenprofil zwei Dicken aufweist, wobei der Abstand zwischen Andruckfläche des Zellblockes und Andruckplatte im ersten Dickenbereich so groß ist, daß ein Objektträger zwischen Andruckplatte und Andruckfläche nicht gegen die Andruckfläche gedrückt wird und im zweitan Dickenbereich der Andruckplatte ein zwischen Andruckplatte und Andruckfläche befindlicher Objektträger über die Andruckplatte durch die Federelemente gegen die Andruckfläche gedrückt wird.

12. Vorrichtung gemäß Anspruch 11, bei der das Höhenprofil der Andruckplatte durch Vertiefungen (35) in der Andrückplatte gegeben ist.

13. Verfahren zur Bearbeitung von Proben auf Objektträgern mit Flüssigkeiten in einer Vorrichtung gemäß Anspruch 9 oder 10, mit den Schritten
- Einlegen eines Objektträgers in die Zelle,
- vertikale Bewegung der Andruckplatte in eine Position, in der die Andruckplatte den Objektträger gegen die Andruckfläche drückt,
- Füllen der Kammer mit Flüssigkeit,
- Entnahme der Flüssigkeit aus der Kammer,
- Entnahme des Objektträgers aus der Zelle.

14. Verfahren gemäß Anspruch 13, mit dem zusätzlichen Schritt, daß die Andruckplatte in die Zelle eingelegt wird.

15. Vorrichtung zur Bearbeitung von Proben auf Objektträgern mit Flüssigkeiten, beinhaltend eine Zelle mit einem Zellblock (10), der eine Andruckfläche (13) besitzt, in der sich eine Ausnehmung (11) befindet und mit einer Andruckvorrichtung zum Andruck eines in der Zelle befindlichen Objektträgers an die Andruckfläche des Zellblockes in der Weise, daß sich aufgrund der Ausnehmung im Zellblock eine Kammer zwischen Zellblock und Objektträger ausbildet, die eine Öffnung (15) besitzt, an die ein Fluidkanal (16) angeschlossen ist, der seinerseits mit mindestens einem Reservoir und einer Pumpvorrichtung verbunden ist sowie weiterhin beinhaltend ein Niederdruckelement, das in seiner Ruhestellung den Fluidkanal gegenüber dem mindestens einen Reservoir und der Pumpvorrichtung absperrt und den Fluidkanal öffnet, wenn es niedergedrückt wird.

16. Vorrichtung gemäß Anspruch 15, bei der sich das Niederdruckelement am Zellenboden befindet und durch einen Objektträger oder ein Andruckelement zum Andrücken des Objektträgers gegen die Andruckfläche des Zellblockes niedergedrückt wird.

17. Vorrichtung gemäß Anspruch 15 oder 16, bei der der Fluidkanal einen elastischen Bereich aufweist und das Niederdruckelement über ein Federelement gegen den elastischen Bereich des Fluidkanals gedrückt wird, so daß der Fluidkanal zusammengequetscht und somit verschlossen wird.

18. Vorrichtung gemäß einem der Ansprüche 15 bis 17, bei der das Niederdruckelement eine Drehachse besitzt, die eine Kraft, die durch einen Objektträger oder eine Andruckplatte (32) auf das Niederdruckelement ausgeübt wird, umlenkt.
